(19) Europäisches Patentamt
European Patent Office
Office européen des brevets

(11) EP 4 397 466 A1

(12) EUROPEAN PATENT APPLICATION
published in accordance with Art. 153(4) EPC

(43) Date of publication:
**10.07.2024 Bulletin 2024/28**

(21) Application number: **22864411.8**

(22) Date of filing: **26.08.2022**

(51) International Patent Classification (IPC):
***B29C 39/44*** *(2006.01)* ***C08J 5/00*** *(2006.01)*
***C08G 18/42*** *(2006.01)*

(52) Cooperative Patent Classification (CPC):
**B29C 39/44; C08G 18/42; C08J 5/00**

(86) International application number:
**PCT/JP2022/032142**

(87) International publication number:
**WO 2023/032827 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021 JP 2021141902**
**10.08.2022 JP 2022127858**

(71) Applicant: **CANON KABUSHIKI KAISHA**
**Tokyo 146-8501 (JP)**

(72) Inventors:
- **OGAWA Ryo**
  **Tokyo 146-8501 (JP)**
- **HIRATANI Takayuki**
  **Tokyo 146-8501 (JP)**
- **SATO Kana**
  **Tokyo 146-8501 (JP)**
- **WATANABE Masahiro**
  **Tokyo 146-8501 (JP)**
- **HINO Tetsuo**
  **Tokyo 146-8501 (JP)**

(74) Representative: **TBK**
**Bavariaring 4-6**
**80336 München (DE)**

# (54) POLYURETHANE-CONTAINING NON-FOAMED MOLDED BODY

(57) Provided is a molded body that is excellent in chipping resistance of the molded body and that can stably exhibit excellent cleaning performance. The molded body is a non-foamed molded body including a polyurethane, wherein, assuming that a straight line L that passes through a center of gravity G of the molded body and a point on a surface of the molded body positioned at a shortest distance from the center of gravity G and that penetrates through the molded body is drawn, a length of a longest line segment LM out of portions on the straight line L that overlap the molded body is at least 180 μm, wherein, when a Martens hardness measured at a point SA on the surface of the molded body where one end portion A of the line segment LM is positioned is represented by $HM_1$, and in a cross-section of the molded body including an entire length of the line segment LM, Martens hardnesses measured at three points on the line segment LM at intervals of 30 μm from the end portion A toward another end of the line segment LM are represented by $HM_2$, $HM_3$, and $HM_4$, respectively, $HM_2>HM_3>HM_4$ is satisfied, wherein the HMi is 1.0 $N/mm^2$ or more, wherein, when, with regard to an index value $K_\omega$ determined by the following equation (1) from a scattering profile obtained by allowing a characteristic X-ray from a Cu tube to incident on a surface region to be evaluated of the molded body including the point SA at an incidence angle θ, the index value at θ=0.5° is represented by $K_{\omega 1}$, the index value at θ=1.0° is represented by $K_{\omega 2}$, and the index value at θ=3.0° is represented by $K_{\omega 3}$, $K_{\omega 1}>K_{\omega 2}>K_{\omega 3}$ is satisfied:

$$K_\omega=[I_c/(I_c+I_a)]\times 100 \quad (1)$$

where $I_c$ represents a peak area value at 2θ=21.0° in the scattering profile, and $I_a$ represents a peak area value at 2θ=20.2° in the scattering profile, and wherein the molded body has an erosion rate E of 0.6 μm/g or less, which is measured with spherical alumina particles having an average particle diameter ($D_{50}$) of 3.0 μm in the surface region to be evaluated.



Processed by Luminess, 75001 PARIS (FR)

(Cont. next page)

FIG. 1

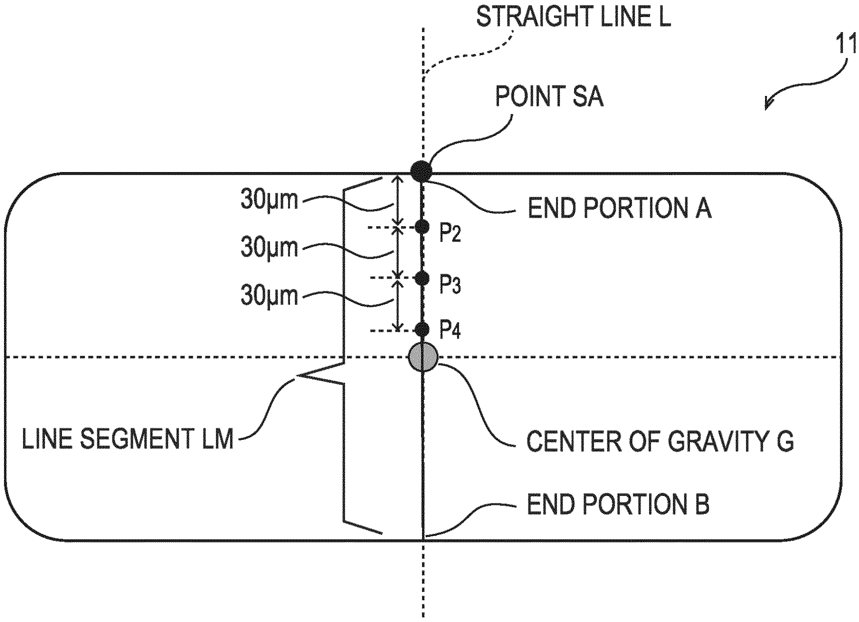
STRAIGHT LINE L
11
POINT SA
30μm
30μm
30μm
END PORTION A
P2
P3
P4
LINE SEGMENT LM
CENTER OF GRAVITY G
END PORTION B

FIG. 1

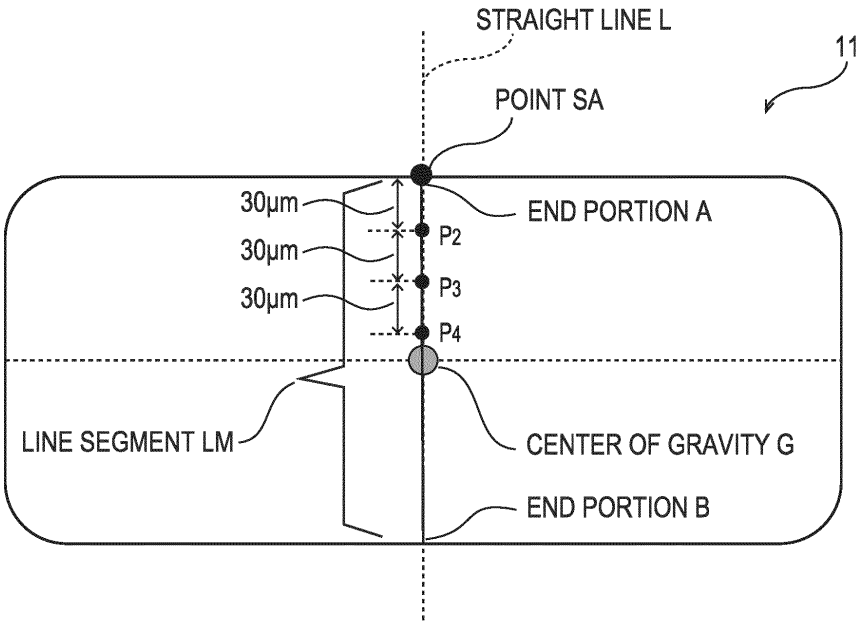
STRAIGHT LINE L
11
POINT SA
30μm
30μm
30μm
END PORTION A
P2
P3
P4
LINE SEGMENT LM
CENTER OF GRAVITY G
END PORTION B

## Description

[Technical Field]

The present disclosure relates to a non-foamed molded body including a polyurethane to be used for cleaning dirt on, for example, a window glass or a floor.

[Background Art]

The present disclosure relates to a non-foamed molded body including a polyurethane that can be used for cleaning or the like.

Cleaning is performed by bringing a plate of a rubber molded body into abutment with an object to be cleaned, such as a window glass of an automobile, a window glass of a building, a floor, or a roller for electrophotography. Specifically, for example, a natural rubber and various synthetic rubbers, such as a chloroprene rubber and an ethylene-propylene-diene rubber (EPDM rubber), are each used for a wiper blade. In addition, in an electrophotographic apparatus, a molded body of a polyurethane resin is used as a cleaning blade for the purpose of cleaning toner from the roller or the like.

In addition, in order to more sufficiently exhibit a cleaning effect, a surface of the rubber molded body to be brought into abutment with the object to be cleaned is increased in hardness. In Patent Literature 1, in order to achieve both the increase in hardness of the surface and followability with respect to a roller serving as the object to be cleaned, there is a proposal of a configuration satisfying the reduction of the hardness of an inside of the cleaning blade as compared to the surface. More specifically, a molded body of a polyurethane is impregnated with an isocyanate compound and subjected to a reaction therewith to form a cured region on the surface while the inside of the cleaning blade is kept flexible.

However, according to the investigations made by the inventors, when the rubber molded body (cleaning blade) formed by increasing the hardness of the surface to be brought into abutment with the object to be cleaned is used over a long period of time as described in Patent Literature 1, fine chipping occurs in the surface of the rubber molded body in some cases because of the shortage of toughness of the surface increased in hardness. As a result, the cleaning effect of the rubber molded body on the object to be cleaned is reduced in some cases.

[Citation List]

[Patent Literature]

PTL 1: Japanese Patent No. 5532376

[Summary of Invention]

[Technical Problem]

One aspect of the present disclosure is directed to provide a molded body including a polyurethane that can stably exhibit a more excellent cleaning property over a long period of time while maintaining stable followability with respect to an object to be cleaned.

[Solution to Problem]

According to one aspect of the present disclosure, there is provided a molded body, wherein, assuming that a straight line L that passes through a center of gravity G of the molded body and a point on a surface of the molded body positioned at a shortest distance from the center of gravity G and that penetrates through the molded body is drawn, a length of a longest line segment LM out of portions on the straight line L that overlap the molded body is at least 180 $\mu$m, when a Martens hardness measured at a point SA on the surface of the molded body where one end portion A of the line segment LM is positioned is represented by $HM_1$, and in a cross-section of the molded body including an entire length of the line segment LM, Martens hardnesses measured at three points on the line segment LM at intervals of 30 $\mu$m from the end portion A toward another end of the line segment LM are represented by $HM_2$, $HM_3$, and $HM_4$, respectively, $HM_1>HM_2>HM_3>HM_4$ is satisfied, wherein the HMi is 1.0 N/mm$^2$ or more, wherein, when, with regard to an index value $K_\omega$ determined by the following equation (1) from a scattering profile obtained by allowing a characteristic X-ray from a Cu tube to incident on a surface region to be evaluated of the molded body including the point SA at an incidence angle $\theta$, the index value at $\theta$=0.5° is represented by $K_{\omega 1}$, the index value at $\theta$=1.0° is represented by $K_{\omega 2}$, and the index value at $\theta$=3.0° is represented by $K_{\omega 3}$, $K_{\omega 1}>K_{\omega 2}>K_{\omega 3}$ is satisfied:

$$K_{\omega}=[I_c/(I_c+I_a)]\times 100 \quad (1)$$

where $I_c$ represents a peak area value at 2θ=21.0° in the scattering profile, and $I_a$ represents a peak area value at 2θ=20.2° in the scattering profile, and wherein the molded body has an erosion rate E of 0.6 μm/g or less, which is measured with spherical alumina particles having an average particle diameter ($D_{50}$) of 3.0 μm in the surface region to be evaluated.

[Advantageous Effects of Invention]

According to one aspect of the present disclosure, the molded body including a polyurethane that can stably exhibit a more excellent cleaning property over a long period of time while maintaining stable followability with respect to an object to be cleaned can be provided.

[Brief Description of Drawings]

[FIG. 1]
FIG. 1 is a schematic view of a molded body according to one aspect of the present disclosure.
[FIG. 2]
FIG. 2 is a view for illustrating a measurement method for an erosion rate.

[Description of Embodiments]

In the present disclosure, the description "XX or more and YY or less" or "from XX to YY" representing a numerical range means a numerical range including a lower limit and an upper limit that are end points unless otherwise stated. In addition, when the numerical ranges are described in stages, the upper and lower limits of each numerical range may be arbitrarily combined.

<Non-foamed Molded Body including Polyurethane>

FIG. 1 is a schematic view of a non-foamed molded body including a polyurethane according to one aspect of the present disclosure.
It is assumed that a straight line L that passes through a center of gravity G of a molded body 11 and a point on the surface of the molded body 11 positioned at the shortest distance from the center of gravity G and that penetrates through the molded body 11 is drawn. In the molded body 11, the length of the longest line segment LM out of the portions on the straight line L that overlap the molded body 11 is at least 180 μm. Further, a point on the surface of the molded body 11 where one end portion A of the line segment LM is positioned is represented by a point SA.

[Determination Method for Center of Gravity]

Herein, the term "center of gravity" refers to a point determined from an arithmetic average calculated from all the points that belong to the contour of the molded body. A multiple integral may be used as a general method of determining a center of gravity based on such definition. In addition, the density of the molded body of the present disclosure may be regarded as uniform, and hence a method including using a cross product of vectors may be applied. Those calculation methods are each a generally known mathematical concept, and hence the detailed description thereof is omitted here.
In addition, as a result of the investigations made by the inventors, the inventors have found that a non-foamed, that is, solid molded body including a polyurethane that satisfies the following conditions (1) to (4) can provide a cleaning blade that is excellent in chipping resistance and that can exhibit excellent cleaning performance.
(1) When a Martens hardness measured at the point SA is represented by $HM_1$, and in a cross-section of the molded body including the entire length of the line segment LM, Martens hardnesses measured at three points ($P_2$, $P_3$, and $P_4$) on the line segment LM at intervals of 30 μm from the end portion A toward the other end (end portion B) of the line segment LM are represented by $HM_2$, $HM_3$, and $HM_4$, respectively, $HM_1>HM_2>HM_3>HM_4$ is satisfied.
(2) The HM1 is 1.0 N/mm$^2$ or more.

(3) When, with regard to an index value $K_\omega$ determined by the following equation (1) from a scattering profile obtained by allowing a characteristic X-ray from a Cu tube to incident on a surface region to be evaluated of the molded body including the point SA at an incidence angle θ, the index value at θ=0.5° is represented by $K_{\omega 1}$, the index value at θ=1.0° is represented by $K_{\omega 2}$, and the index value at θ=3.0° is represented by $K_{\omega 3}$, $K_{\omega 1}>K_{\omega 2}>K_{\omega 3}$ is satisfied:

$$K_\omega=[I_c/(I_c+I_a)]\times 100 \quad (1)$$

where $I_c$ represents a peak area value at 2θ=21.0° in the scattering profile, and $I_a$ represents a peak area value at 2θ=20.2° in the scattering profile.

(4) The molded body has an erosion rate E of 0.6 μm/g or less, which is measured with spherical alumina particles having an average particle diameter ($D_{50}$) of 3.0 μm in the surface region to be evaluated.

The Martens hardness measured at the point SA present on the surface of the molded body is represented by HMi. In the cross-section of the molded body including the entire length of the line segment LM, Martens hardnesses measured at three points ($P_2$, $P_3$, and $P_4$) on the line segment LM at intervals of 30 μm from the end portion A toward the other end of the line segment LM are represented by $HM_2$, $HM_3$, and $HM_4$, respectively. At this time, when $HM_2>HM_3>HM_4$ is satisfied, the molded body has a structure in which a hardness is reduced from the surface toward the inside.

The Martens hardness HMi of the outermost surface of the molded body according to the present disclosure is 1.0 $N/mm^2$ or more. When the Martens hardness of the outermost surface is 1.0 $N/mm^2$ or more, the molded body can abut on an object to be cleaned with a high abutting pressure. In addition, the Martens hardness HMi of the outermost surface is preferably 5.0 $N/mm^2$ or less. When the Martens hardness HMi of the outermost surface is 5.0 $N/mm^2$ or less, the molded body can flexibly abut on the obj ect to be cleaned even under a state in which streak-like unevenness is formed on the object to be cleaned when the molded body is used as the cleaning blade over a long period of time. As a result, the occurrence of a cleaning failure can be suppressed.

The index value $K_\omega$ is a value calculated by evaluating a surface region to be evaluated of the molded body including the point SA by a grazing incidence X-ray method. According to the grazing incidence X-ray method, information on sites at different depths from a surface can be obtained through measurement with the incidence angle of an X-ray being minutely changed, and information on a deeper portion can be obtained by increasing the incidence angle. When measurement is performed with the incidence angle being changed from 0.5° to 3°, structural information at a depth of from 10 μm to 65 μm can be obtained with a characteristic X-ray from a Cu tube. With use of the structural information obtained at each depth, the index value $K_\omega$ of crystallinity is calculated from an area ratio between a crystal peak and an amorphous peak. A larger $K_\omega$ indicates a higher crystallinity (a larger amount of a crystal component).

In the molded body according to the present disclosure, when, with regard to an index value $K_\omega$ determined by the equation (1) from a scattering profile obtained by allowing a characteristic X-ray from a Cu tube to incident on a surface region to be evaluated at an incidence angle ω, $K_\omega$ values calculated at the time of the setting of the incidence angle to $\omega_1$=0.5°, $\omega_2$=1°, and $\omega_3$=3° are represented by $K\omega_1$, $K\omega_2$, and $K\omega_3$, respectively, $K\omega_1>K\omega_2>K\omega_3$ is satisfied. This indicates that the molded body is in a state in which its crystallinity is highest at the outermost surface, and the crystallinity gradually becomes lower toward the inside (in the depth direction from the surface).

By achieving the state in which the crystallinity gradually becomes lower toward the inside, the molded body achieves such a structure that its surface is appropriately hard and its inside maintains flexibility, which is suitable for the present disclosure.

In the molded body according to the present disclosure, it is preferred that an area of the surface region to be evaluated be equal to or larger than an irradiation area of the X-ray. Specifically, it is preferred that the irradiation area be from 11.5 $\mu m^2$ to 15.0 $\mu m^2$. When the area of the surface region to be evaluated is equal to or larger than the irradiation area of the X-ray, a sufficient X-ray intensity can be obtained in the surface of the molded body, and hence dependence of the index value on the shape of the molded body can be reduced. Accordingly, the evaluation of crystallinity can be more accurately performed.

The erosion rate E is a value calculated through a micro slurry jet erosion (MSE) test. The MSE test involves jetting fine particles each having an appropriate particle diameter onto a molded body in a pulsed manner, and calculating the erosion rate from the eroded depth of the molded body at the portion onto which the fine particles have been jetted and the jet amount of the fine particles. The erosion rate E indicates an eroded depth per unit jet amount, and is a parameter indicating the brittleness of an object to be evaluated. That is, a larger value of the erosion rate E indicates that the object to be evaluated is more brittle. Accordingly, a molded body having a large erosion rate E is liable to suffer the occurrence of fine chipping when used over a long period of time.

A general polyurethane tends to become more brittle as its hardness is increased more. However, the molded body according to the present disclosure, despite having a surface increased in hardness, has a small parameter (erosion

rate E) indicating brittleness calculated through the MSE test. That is, the surface is not brittle despite having a high hardness.

In addition, it may be considered that the MSE test is a value indicating durability of the molded body over a long period of time. For example, when the molded body having a surface having an erosion rate E measured with spherical alumina particles having an average particle diameter ($D_{50}$) of 3.0 μm of 0.6 μm/g or less is used in a cleaning application, the molded body has a sufficient strength. Accordingly, even cleaning over a long period of time hardly causes chipping in an abutting portion with the object to be cleaned, and hence the occurrence of a cleaning failure due to chipping can be suppressed. In the molded body according to the present disclosure, the erosion rate E is particularly preferably 0.5 μm/g or less. Thus, the molded body is stronger against wear, and can more reliably suppress the occurrence of fine chipping in an abutting portion with the object to be cleaned when used in a cleaning application.

The MSE test may be performed with, for example, MSE-A Type Tester (Palmeso Co., Ltd.).

<Non-foamed Polyurethane>

The molded body including a polyurethane according to the present disclosure is preferably non-foamed, that is, solid. The polyurethane is obtained from a raw material, mainly for example, a polyol, a polyisocyanate, a chain extender, a catalyst, and any other additive. Those constituents suitable for achieving the physical properties as described above are described in detail below.

[Non-foamed]

The reason why the molded body according to the present disclosure is preferably non-foamed, that is, solid, is as follows: fracture resulting from foam hardly occurs, and hence mechanical properties as a molded body are hardly impaired. However, foam that is inevitably mixed during a manufacturing process falls within the acceptable range. Specifically, for example, the acceptable content of the foam is 10 vol% or less, preferably 1 vol% or less.

[Polyol]

An example of the polyol that may be used in the production of the molded body according to the present disclosure is a polyol having at least one hydroxy group at a terminal of a polymer, a terminal of a branched chain, or the like.

Examples of the polyol include, but not particularly limited to, commercially available polyols to be used in the production of the polyurethane. Examples thereof include: polyester polyols each obtained by polycondensation of a polyhydric alcohol and a polyvalent carboxylic acid; polyether polyols each obtained by ring-opening polymerization of an alkylene oxide; polymer polyols each obtained by radically polymerizing a vinyl monomer in a polyether polyol; polyester amide polyols each obtained by polycondensation of a polyhydric alcohol, a polyvalent carboxylic acid, and an amino alcohol; polylactone polyols each obtained by ring-opening polymerization of a lactone; polycarbonate polyols each obtained by polycondensation of a polyhydric alcohol and a carbonate; acrylic polyols; polybutadiene polyol and hydrogenated products thereof; polyisoprene polyol and hydrogenated products thereof; partially saponified ethylene-vinyl acetate copolymers; natural oil-based polyols, such as soybean oil and castor oil; halogen- and/or phosphorus-based polyols; and phenol-based polyols.

Examples of the polyether polyol include polyether polyol compounds each obtained by subjecting a polymerization initiator, such as ethylenediamine, tolylenediamine, sucrose, an amino alcohol, or diethylene glycol, to ring-opening addition polymerization with an alkylene oxide, such as ethylene oxide or propylene oxide.

Examples of the halogen- and/or phosphorus-based polyol include: halogen-containing polyols each obtained by ring-opening polymerization of epichlorohydrin or trichlorobutylene oxide; halogen-based polyols, such as a brominated pentaerythritol/sucrose-based polyol and a tetrabromophthalic acid polyester; and phosphorus-based polyols each obtained by addition of an alkylene oxide to a phosphoric acid compound.

Examples of the phenol-based polyol include Mannich-based polyols each obtained by subjecting phenol or a phenol derivative, such as nonyl phenol or an alkyl phenol, to Mannich modification with formaldehyde and a secondary amine such as diethanolamine, ammonia, or a primary amine, and subjecting the resultant to ring-opening addition polymerization with an alkylene oxide, such as ethylene oxide or propylene oxide.

An example of the polycarbonate polyol is a reaction product of the above-mentioned polyol and a dialkyl carbonate typified by dimethyl carbonate. Specific examples thereof include polytetramethylene carbonate diol, poly-3-methyl pentamethylene carbonate diol, and polyhexamethylene carbonate diol. Examples of the polyether polyol include reaction products obtained by addition polymerization of one kind or two or more kinds of the following monomers with one kind or two or more kinds of the following compounds each having at least two active hydrogen atoms serving as initiators, and the addition may be block addition, random addition, or a combination of both types.

·Compounds each having at least two active hydrogen atoms: ethylene glycol, propylene glycol, 1,3-butylene glycol, 1,4-butanediol, 1,6-hexanediol, diethylene glycol, neopentyl glycol, catechol, hydroquinone, bisphenol A, and the like
·Monomer: ethylene oxide, propylene oxide, butylene oxide, styrene oxide, epichlorohydrin, tetrahydrofuran, cyclohexylene, and the like

Specific examples thereof include polyethylene glycol, polypropylene glycol, and polytetramethylene ether glycol.
Examples of the polyolefin polyol include a polyacrylic acid ester polyol, a chlorinated polyolefin polyol, a polybutadiene polyol, a polychloroprene polyol, and a polybutadiene styrene polyol.
A polyol that is solid (crystallized) at normal temperature may be used as the polyol. A polyester polyol used in the production of the polyurethane is particularly preferably used because, in the production of the molded body of the present disclosure, the polyester polyol is easily available and is excellent in balance between a crystallization temperature and a melting point of crystallization. The polyester polyol may be obtained by a known method such as polycondensation of a polyhydric alcohol and a polyvalent carboxylic acid.
Examples of the polyester polyol include compounds each derived from a dibasic acid and a polyhydric alcohol. Examples thereof include, but not particularly limited to, polyester polyols derived from adipic acid, orthophthalic acid, terephthalic acid, isophthalic acid, phthalic anhydride, succinic acid, azelaic acid, sebacic acid, ricinoleic acid, dimethyl terephthalate, and polyethylene terephthalate. Another example thereof is a lactone-based polyester polyol obtained by ring-opening polymerization of a cyclic ester, such as ε-caprolactone or methyl valerolactone.
In particular, in order to obtain the effect of the present disclosure, it is required that the crystal structure be gradually attenuated from the surface toward the inside. A polyester polyol having a linear alkyl chain that has a structural unit represented by the following chemical formula (1) and is solid (crystallized) at normal temperature, the polyester polyol having a crystallization temperature of 0°C or more and 150°C or less, is preferred because the polyester polyol is suitable for the production. In addition, it is required that the polyester polyol be crystallized at normal temperature, and hence the melting point is preferably 30°C or more, more preferably 40°C or more. The melting point and the crystallization temperature may each be determined by a known method such as differential scanning thermal analysis.

[Chem. 1]
Chemical formula (1)

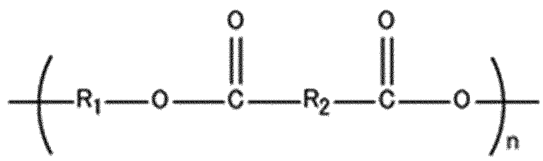

In the chemical formula (1), $R_1$ and $R_2$ each represent a linear divalent hydrocarbon group having 4 to 10 carbon atoms, and $R_1$ and $R_2$ may be identical to or different from each other, and "n" represents an integer of 1 or more.
From the viewpoints of production and the characteristics of the crystal structure, a polyester polyol in which $R_1$ and $R_2$ are different from each other is preferred. In addition, the polyester polyol may contain a linear divalent hydrocarbon group having 2 or 3 carbon atoms.
The number-average molecular weight of the polyester polyol as a whole is preferably from 400 to 10,000, particularly preferably from 800 to 4,000. When the number-average molecular weight is 800 or more, the hardness and chipping resistance of the urethane to be obtained are satisfactory by virtue of the crystallization of the main chain of the polyol, and when the number-average molecular weight is 4,000 or less, the polyester polyol is excellent in handleability by having an appropriate viscosity when heated and used, and provides a satisfactory hardness.
When $R_1$ and $R_2$ in the chemical formula (1) each have 3 or less carbon atoms, crystallization hardly progresses, and hence the hardness of the surface is difficult to increase. In addition, when $R_1$ and $R_2$ each have 11 or more carbon atoms, there is a tendency that excessive crystallization occurs to increase the brittleness.
Meanwhile, when $R_1$ and $R_2$ each represent a linear divalent hydrocarbon group having 4 to 10 carbon atoms, the crystal structure to be formed by the orientation of the main chain moiety of the polyol has a high hardness, and the hardness is reduced as the crystal structure disappears. Accordingly, when the crystal structure is attenuated from the surface toward the inside, the hardness can be continuously reduced from the surface toward the inside. Consequently, the molded body according to the present disclosure can increase the abutting pressure on the object to be cleaned. In addition, the followability to the shape of the object to be cleaned can even be enhanced.
In addition, in a cured region formed through impregnation with an isocyanate compound as described in Patent Literature 1, an aggregated hard segment is present. Accordingly, when a stress is applied thereto, the hard segment

is liable to fall off to cause chipping. Meanwhile, the molded body according to the present disclosure has a high-hardness region having a crystal structure in which main chains of the polyol having a linear alkyl chain having 4 or more and 10 or less carbon atoms are oriented through an intermolecular force therebetween. Accordingly, the molded body according to the present disclosure is excellent in impact-absorbing property. Accordingly, when the molded body according to the present disclosure is applied as an elastic member of the cleaning blade, there is no falling-off of the hard segment by a microstress due to unevenness in hardness even in the case where the cleaning blade is used over a long period of time, and hence the molded body is excellent in chipping resistance.

In addition, it is preferred to combine two or more kinds of polyester polyols each having a linear alkyl chain having 4 to 10 carbon atoms. Thus, the asymmetry of the crystal structure is increased, and hence a region that is more excellent in impact resistance can be formed. As a result, a cured region that is more excellent in chipping resistance can be formed.

Further, a case in which the following first polyester polyol and the following second polyester polyol are used in combination is preferred because an interaction between crystal structures is promoted to further improve the impact resistance.

·First polyester polyol: polyester polyol having a linear alkyl chain having 4 to 6 carbon atoms
·Second polyester polyol: polyester polyol having both of a linear alkyl chain having 7 to 10 carbon atoms and a linear alkyl chain having 4 to 6 carbon atoms

Examples of the suitable polyester polyol include NIPPOLLAN (trademark) 164 (manufactured by Tosoh Corporation), NIPPOLLAN (trademark) 4073 (manufactured by Tosoh Corporation), NIPPOLLAN (trademark) 136 (manufactured by Tosoh Corporation), NIPPOLLAN (trademark) 4009 (manufactured by Tosoh Corporation), NIPPOLLAN (trademark) 4010 (manufactured by Tosoh Corporation), NIPPOLLAN (trademark) 3027 (manufactured by Tosoh Corporation), POLYLITE (trademark) OD-X-2555 (manufactured by DIC Corporation), POLYLITE (trademark) OD-X-2523 (manufactured by DIC Corporation), and ETERNACOLL (trademark) 3000 series (manufactured by Ube Industries, Ltd.).

The structure of the chemical formula (1) may be determined with a mass spectrometer of a direct sample introduction system involving ionizing a sample molecule.

Specifically, when a detection amount of all ions when a sample to be sampled from the molded body according to the present disclosure is heated to be vaporized in an ionization chamber, and is heated at a temperature increase rate of 10°C/sec to 1,000°C with a mass spectrometer of a direct sample introduction system involving ionizing a sample molecule is represented by M1, and an integral intensity of a peak of an extracted ion thermogram corresponding to an m/z value derived from the chemical formula (1) is represented by M2, a ratio M2/M1 is preferably from 0.0001 to 0.10000. When the structure of the chemical formula (1) is incorporated within this range, the crystal structure of the surface can be formed more reliably.

[Polyisocyanate]

Examples of the polyisocyanate include 4,4'-diphenylmethane diisocyanate (MDI), 1,5-pentamethylene diisocyanate, 2,4-tolylene diisocyanate (2,4-TDI), 2,6-tolylene diisocyanate (2,6-TDI), xylene diisocyanate (XDI), 1,5-naphthylene diisocyanate (1,5-NDI), P-phenylene diisocyanate (PPDI), hexamethylene diisocyanate (HDI), isophorone diisocyanate (IPDI), 4,4'-dicyclohexylmethane diisocyanate (hydrogenated MDI), tetramethylxylene diisocyanate (TMXDI), carbodiimide-modified MDI, polymethylene phenyl polyisocyanate (PAPI), a trimer compound (isocyanurate) or multimer compound of any of those diisocyanates, an allophanate-type polyisocyanate, a biuret-type polyisocyanate, and a water dispersion-type polyisocyanate. Those polyisocyanates may be used alone or in combination thereof. In addition, the polyisocyanates may each be used by being subjected to a reaction with any of various polyols to form a prepolymer. Of those, a mixture of a xylylene diisocyanate trimer (isocyanurate form) and a xylylene diisocyanate monomer is preferably used because the mixture is excellent in mechanical characteristics. Those polyisocyanates may be used alone or in combination thereof.

When the hard segment crystallizes, the brittleness tends to be reduced, though the hardness is increased.

For this reason, in order to keep the formation of the hard segment appropriate, the kind and amount of the isocyanate are appropriately adjusted so as to achieve an appropriate chemical bond amount. In particular, an isocyanate trimer is particularly preferred because the presence of a branched structure or a strain structure in a skeleton can reduce the formation of the hard segment.

[Chain Extender]

Examples of the chain extender include: aliphatic diols, such as ethylene glycol, propylene glycol, 1,3-propanediol, 1,3-butanediol, 1,4-butanediol, 1,5-pentanediol, 1,6-hexanediol, neopentyl glycol, diethylene glycol, dipropylene

glycol, and tripropylene glycol; alicyclic diols, such as 1,4-cyclohexanediol, 1,4-cyclohexanedimethanol, and hydrogenated bisphenol A; aromatic ring-containing diols, such as bisphenol A, hydroquinone, and bishydroxyethoxybenzene; and polyhydric alcohols, such as trimethylolpropane, glycerin, pentaerythritol, and sorbitol. Those chain extenders may be used alone or in combination thereof.

[Catalyst]

In the present disclosure, a catalyst generally used in the curing reaction of the polyurethane may be used for the purpose of promoting a urethanization reaction between the polyisocyanate and the polyol. Examples of the catalyst include: tin compounds, such as tin octylate and dibutyltin dilaurate; zinc compounds, such as zinc octylate and zinc acetylacetonate; organic carboxylic acid salts, such as potassium acetate and potassium 2-ethylhexanoate; and amine compounds, such as triethylenediamine, tetramethylbutanediamine, N,N-dimethyl-N',N'-bis(hydroxyethyl)ethylenediamine, N,N-dimethyl-N',N'-bis(hydroxyethyl)propanediamine, N,N-dimethyl-N',N'-bis(hydroxyethyl)neopentanediamine, N,N-dimethyl-N',N'-bis(hydroxyethyl)hexanediamine, N-(N,N-bis(hydroxyethyl)aminoethyl)piperidine, N,N-bis(dimethylaminopropyl)-N',N'-bis(hydroxyethyl)ethylenediamine, N,N-bis(dimethylaminopropyl)-N',N'-bis(hydroxyethyl)propanediamine, N,N-dimethyl-N',N'-bis(hydroxypropyl)ethylenediamine, N,N-dimethyl-N',N'-bis(hydroxypropyl)propanediamine, N,N-dimethyl-N',N'-bis(hydroxypropyl)neopentanediamine, N,N-dimethyl-N',N'-bis(hydroxypropyl)hexanediamine, N-(N,N-bis(hydroxyethyl)aminoethyl)piperidine, N,N-bis(dimethylaminopropyl)-N',N'-bis(hydroxyethyl)ethylenediamine, N,N-bis(dimethylaminopropyl)-N',N'-bis(hydroxyethyl)propanediamine, N-(2-hydroxyethyl)-N,N',N",N"-tetramethyl diethylenetriamine, N'-(2-hydroxyethyl)-N,N,N",N"-tetramethyl diethylene triamine, N-(2-hydroxypropyl)-N,N',N'',N"-tetramethyl diethylenetriamine, N'-(2-hydroxypropyl)-N,N,N",N"-tetramethyldiethylenetriamine, N'-(2-hydroxypropyl)-N,N,N'-trimethyl-bis(2-aminoethyl) ether, N'-(2-hydroxyethyl)-N,N,N'-trimethyl-bis(2-aminoethyl) ether, 1,5-diazabicyclo[4.3.0]non-5-ene, 1,8-diazabicyclo[5.4.0]undec-7-ene, 2,3-dimethyl-3,4,5,6-tetrahydro-1,3-diazine, 1,4-diazabicyclo[2.2.2]octane, and 1,4-diazabicyclo[2.2.2]octane-2-methanol. Those catalysts may be used alone or in combination thereof.

[Other additives]

As required, additives, such as a pigment, a plasticizer, a water-proofing agent, an antioxidant, a UV absorber, and a light stabilizer, may be further blended. In addition, a polyrotaxane may be incorporated as a toughness-improving agent. In particular, a polyrotaxane having a hydroxy group may also be used as the polyol, and hence may be suitably used.

<Method of producing Molded Body>

An example of a method of producing the molded body according to one aspect of the present disclosure is described below.

[Curing Conditions]

In general, in order that the polyurethane may be sufficiently cured by causing a urethanization reaction to reliably proceed, a reaction temperature and a reaction time are controlled. Meanwhile, in the present disclosure, by virtue of adopting the following curing conditions, an increase in brittleness accompanying an increase in hardness, which has been a problem with the related-art polyurethane, can be prevented. The curing conditions are described in detail below.

In the production of the related-art polyurethane, the polyurethane is cured through heating until its crosslinking is completed, followed by aging under a predetermined atmosphere. Meanwhile, in the production of the elastic member according to the present disclosure, curing is terminated before the crosslinking of the polyurethane is completed, and then the polyurethane is subjected to secondary curing by being aged under an atmosphere having a temperature equal to or lower than the crystallization temperature of the polyol.

In a semi-cured polyurethane obtained by terminating a curing reaction under a state in which the crosslinking of the polyurethane has not been completed yet, the unreacted polyol is present in a state of having high molecular mobility. While this state is maintained, the semi-cured polyurethane is subjected to the secondary curing under an atmosphere having a temperature equal to or lower than the crystallization temperature of the polyol. Thus, a temperature gradient is formed from the surface of the semi-cured polyurethane toward the inside thereof. Consequently, the surface of the semi-cured polyurethane is rapidly cooled by being placed under the above-mentioned atmosphere, and the crystallization of the main chain moiety of the remaining polyol proceeds. Meanwhile, on the inside of the semi-cured polyurethane, the cooling by the placement under the above-mentioned atmosphere is delayed as compared to the

surface, and hence the crosslinking of the polyurethane proceeds and the crystallization of the polyol hardly proceeds. As a result, there is formed a structure in which the amount of the crystallized polyol is gradually attenuated from the surface toward the inside. The thus obtained elastic member has an increased hardness in the vicinity of the surface because of the crystallization of the main chain moiety of the polyol. Meanwhile, the hardness is low on the inside because the crystallization of the polyol has not proceeded relatively. Accordingly, the Martens hardness is gradually attenuated from the surface toward the inside.

When the polyurethane is cured until its crosslinking is completed as in the related art, the crosslinked structure of the polyurethane is sufficiently developed, and hence, even if the unreacted polyol remains, its molecular mobility is low. Accordingly, it is conceived that, even when aging is thereafter performed at a temperature equal to or lower than the crystallization temperature of the polyol, the main chain moiety of the polyol is hardly oriented and the crystallization of the surface hardly proceeds.

In addition, when the curing reaction is terminated under a state in which the crosslinking of the polyurethane is incomplete, and then aging is performed under an atmosphere having a temperature higher than the crystallization temperature of the polyol, the crystallization of the main chain moiety of the polyol does not proceed and the crosslinking of the polyurethane also proceeds at the surface. Accordingly, it is difficult to increase the Martens hardness of the surface of the polyurethane to be obtained.

In the present disclosure, the urethane is chemically crosslinked in the primary curing, though incompletely, and hence the surface after the secondary curing has a configuration in which the crystal structure of the main chain moiety of the polyol and the chemical crosslinking of the urethane coexist. When only the crystal structure of the main chain moiety of the polyol is present at the surface, the Martens hardness of the surface is excessively high, and hence the molded body cannot flexibly abut on an object to be cleaned that is in a state of having streak-like unevenness formed on its surface when used over a long period of time, leading to the occurrence of a cleaning failure.

The crystallization of the polyol may be adjusted based on the degree to which the chemical crosslinking of the urethane proceeds at the time of the primary curing, and the difference between the temperature of the atmosphere at the time of the secondary curing and the crystallization temperature of the polyol. As the chemical crosslinking of the urethane at the time of the primary curing is reduced, the molecular mobility of the polyol after the primary curing increases to facilitate the crystallization of the surface, and to make it easier for the crystallization to reach deeper inside. Further, as the difference between the temperature of the atmosphere at the time of the secondary curing and the crystallization temperature of the polyol is increased, the crystallization proceeds more easily, and the crystallization at the surface and to the inside is promoted.

A molded body in which the molded body and a supporting member are integrated may be obtained by placing the supporting member in a mold for molding, then pouring the above-mentioned polyurethane raw material composition into the mold, and performing the primary curing and the secondary curing as described above. In addition, a polyurethane elastomer sheet cured under production conditions satisfying the above-mentioned curing conditions may be molded, and then cut into a strip shape and bonded onto the supporting member. A method for the bonding may be selected from: a method involving applying or sticking an adhesive onto the supporting member and bonding the molded body thereto; a method involving performing the bonding by stacking the molded body and the supporting member together and heating and pressurizing the stack; and the like.

In addition, after the secondary curing, cutting may be performed to adjust the shape of the edge of the molded body to be brought into abutment with the object to be cleaned. When the polyurethane elastomer sheet is produced in advance and bonded to the member, the cutting may be performed before the bonding or after the bonding.

[Examples]

The present disclosure is described below by way of Examples and Comparative Examples, but the present disclosure is by no means limited thereto.

<Evaluation Method>

Evaluation methods are described below.

[Measurement Method for Polyol Component]

The measurement of a polyol component was performed by a direct sample introduction method (DI method) involving directly introducing a sample into an ion source without passage through a gas chromatograph (GC).

POLARIS Q manufactured by Thermo Fisher Scientific K.K. was used as an apparatus, and a direct exposure probe (DEP) was used.

Assuming that a first line segment was drawn on the distal end surface parallel to the distal end-side edge at

a distance of 10 μm from the distal end-side edge, the length of the first line segment was represented by L, and the polyurethane was scraped with a bio cutter from a point SA on the first line segment at 1/2L from one end side.

About 0.1 μg of the sample sampled at the SA was fixed to a filament positioned at the distal end of the probe to be directly inserted into an ionization chamber. After that, the sample was rapidly heated at a constant temperature increase rate (10°C/s) from room temperature to 1,000°C to be vaporized, and the resultant gas was detected with a mass spectrometer.

The detection amount M1 of all ions was defined as the total of the integral intensities of all peaks in the resultant total ion current thermogram. In addition, the detection amount M2 of the polyol component was defined as an integral intensity of a peak of an extracted ion thermogram corresponding to an m/z value calculated by the calculation equation (2).

m/z Value:

$$M2=(200+\{14\times(R1-4)+14\times(R2-4)\}+1)\pm0.5 \qquad \text{Equation (2)}$$

R1 and R2 in the equation (2) represent the carbon numbers of $R_1$ and $R_2$ in the chemical formula (1), respectively.

A numerical value obtained from the sample scraped from the point SA was adopted as an M2/M1 value in the present disclosure.

[Martens Hardness]

A Martens hardness was measured with "Shimadzu dynamic ultramicrohardness meter "DUH-W211S"" manufactured by Shimadzu Corporation. A measurement environment was set to a temperature of 23°C and a relative humidity of 55%. An indenter used was a triangular pyramid diamond indenter having a ridge interval of 115°, and the Martens hardness was determined from the following calculation equation (3).

$$\text{Martens hardness: } HM=\alpha\times P/D^2 \qquad \text{Equation (3)}$$

In the equation (3), α represents a constant based on the shape of the indenter, P represents a test force (mN), and D represents the penetration amount of the indenter into the sample (indentation depth) (μm). Measurement conditions are as described below.

α: 3.8584
D: 2.0 μm
Load speed: 0.03 mN/sec
Retention time: 5 seconds

Assuming that, as illustrated in FIG. 1, the straight line L that passed through the center of gravity G of the molded body and the point on the surface of the molded body positioned at the shortest distance from the center of gravity G and that penetrated through the molded body was drawn, the point on the straight line L on the surface of the molded body where one end portion A of the line segment LM was positioned was represented by SA, and a Martens hardness HMi was measured at the position of the SA.

Further, Martens hardnesses ($HM_2$, $HM_3$, and $HM_4$) were measured at respective positions ($P_2$, $P_3$, and $P_4$), which were points on the line segment LM at distances of 30 μm, 60 μm, and 90 μm from the measurement point SA.

[Crystallinity Analysis]

The crystallinity of a polyurethane was measured by grazing incidence X-ray diffraction (XRD) with an X-ray diffractometer (product name: ATX-G; manufactured by Rigaku Corporation).

An X-ray incidence angle was set to ω1=0.5°, ω2=1°, and co3=3°, crystal peak areas in measurement at the respective angles were set to $I_{c1}$, $I_{c2}$, and $I_{c3}$, respectively, and amorphous peak areas therein were set to $I_{a1}$, $I_{a2}$, and $I_{a3}$, respectively. As the X-ray incidence angle becomes smaller, a state closer to the surface side is shown.

Measurement conditions are as described below.

·Tube: Cu (40 kV, 20 mA)
·Slit condition: S2 (1 mm in length, 0.1 mm in width)
·R.S., G.S.: open
·Soller slit=0.41

Origin 2016 (manufactured by OriginLab Corporation) was used as software for peak area analysis. First, a background was determined and subtracted from an XRD pattern. Next, peaks were separated into a crystal peak at 2θ=21° and an amorphous component-derived peak at 2θ=20°. Numerical fitting was applied with the position of the crystal peak being fixed, and with constraints with numerical values being placed so that the integral value of each component took a positive value and the half-width of each peak became an appropriate value.
An area value $I_c$ of the crystal peak was defined as an area value obtained by integrating a peak having a peak top at 2θ=21° from the baseline over the region of 2θ=13° to 30° at a time when the baseline was drawn for 2θ=3° to 40°.
An area value $I_a$ of the amorphous peak was defined as an area value obtained by integrating a peak having a peak top at 2θ=20.2° from the baseline over the region of 2θ=13° to 30° at a time when the baseline was drawn for 2θ=3° to 40°. $I_{c1}$ and $I_{a1}$ were substituted into the following equation (1) to provide an index $K_{\omega 1}$ of crystallinity. Similarly, $I_{c2}$ and $I_{a2}$ were substituted into the following equation (1) to provide an index $K_{\omega 2}$, and $I_{c3}$ and $I_{a3}$ were substituted into the following equation (1) to provide an index $K_{\omega 3}$.

$$K_{\omega}=[I_c/(I_c+I_a)]\times 100 \qquad (1)$$

Whether or not the obtained values of $K_{\omega 1}$, $K_{\omega 2}$, and $K_{\omega 3}$ satisfied the following relationship was evaluated. Then, a case in which the values satisfied the relationship was shown as the symbol "Y", and a case in which the values did not satisfy the relationship was shown as the symbol "N", in the column "Crystallinity analysis" in each of Table 2 and Table 3.

Crystallinity:

Y: Case of satisfying $K_{\omega 1}>K_{\omega 2}>K_{\omega 3}$
N: Case of not satisfying $K_{\omega 1}>K_{\omega 2}>K_{\omega 3}$

In the case where $K_{\omega 1}$, $K_{\omega 2}$, and $K_{\omega 3}$ satisfy the relationship of $K_{\omega 1}>K_{\omega 2}>K_{\omega 3}$, it is indicated that the ratio of the crystal peak at 2θ=21° is decreased from the surface side toward the inside. That is, it is indicated that the crystallinity is reduced from the surface of the cleaning blade toward the inside thereof.

[Measurement of Area of Surface Region to be evaluated]

The irradiation area of the X-ray is a value determined by the slit condition and the X-ray incidence angle. In the slit condition according to this Example, the X-ray irradiation area when ω1=0.5° is 11.5 $mm^2$, the X-ray irradiation area when ω2=1° is 5.8 $mm^2$, and the X-ray irradiation area when ω3=3° is 1.9 $mm^2$. The relationship of the area of the surface region to be evaluated of the molded body according to this Example with respect to the X-ray irradiation area was evaluated by the following criteria. In addition, the symbol "Y" or "N" was shown in the column "Area to be evaluated" in each of Table 2 and Table 3 in accordance with the results of the evaluations.

Y: The area of the surface region to be evaluated is equal to or more than the irradiation area of the X-ray.
N: The area of the surface region to be evaluated is less than the irradiation area of the X-ray.

[Evaluation of Erosion Rate E]

An erosion rate was measured with "MSE-A Type Tester" manufactured by Palmeso Co., Ltd.
Spherical alumina powder having an average particle diameter of 3.0 μm (product name: "AX3-15", manufactured by Nippon Steel & Sumikin Materials Co., Ltd. Micron Co.) was dispersed in water to prepare a slurry containing spherical alumina at 3 mass% with respect to the total mass of the slurry.
As illustrated in FIG. 2, a molded body 23 was fixed to a stage (not shown) so that a slurry 22 jetted from a nozzle 21 was jetted perpendicularly to the surface of the molded body 23. The distance between the surface of the molded body 23 and the lower end of the nozzle 21 was set to 4 mm, and the slurry 22 in which spherical alumina 24

was dispersed in water 25 was jetted.

A measurement environment was set to a temperature of 23°C and a relative humidity of 55%, a slurry jet speed was set to 100 m/sec, and a cut depth was measured with a probe-type surface shape measurement device manufactured by Kosaka Laboratory Ltd. through use of a probe with a diamond needle having a distal end radius R of 10 μm. The jetting conditions in this case were adjusted by the following method.

The slurry jetting conditions were adjusted in advance in the above-mentioned measurement environment with an existing hardness standard piece (product name: "HRC-45", manufactured by Yamamoto Scientific Tool Laboratory Co., Ltd.) so that a cut of 6.0 μm was made when 6.0 g of the slurry was jetted. The erosion rate E in this case is 1.0 μm/g.

The measurement was performed at the measurement point SA, the slurry was jetted until a cut depth of 20 μm was achieved, and the erosion rate E was determined from the amount of the slurry jetted through use of the following equation (3).

$$\text{Erosion rate E } (\mu m/g) = \text{cut depth } (20\ \mu m) / \text{jet amount (g) of spherical alumina particles} \quad (3)$$

[Evaluation of Cleaning Performance]

For evaluating the cleaning performance, spherical silica powder having an average particle diameter of 3.0 μm (product name: "AX3-15", manufactured by Nippon Steel & Sumikin Materials Co., Ltd. Micron Co.) was dispersed in water to prepare a slurry containing spherical alumina at 3 mass% with respect to the total mass of the slurry. The slurry after the preparation was applied to a surface of a glass substrate. The resultant was dried, and then ion-exchanged water was dropped to the surface of the glass substrate again.

The glass substrate was fixed to a stage of the following surface property measurement apparatus, and the following molded body was brought into abutment with the surface of the glass substrate to which the slurry was applied and 1 g of the ion-exchanged water was dropped so that an angle formed by the molded body and the glass substrate became 24°. The stage to which the glass substrate was fixed was subjected to reciprocating motion to perform a sliding test.

Surface property measurement apparatus: TYPE38 manufactured by Shinto Scientific Co., Ltd.

Molded body:

Shape: strip shape
Size: width: 30 mm, length: 20 mm, thickness: 2 mm

Test conditions:

| | |
|---|---|
| Load at the time of sliding: | 100 g |
| Sliding speed: | 100 mm/sec |
| Sliding time: | 5 minutes |
| Set distance of reciprocating motion: | 50 mm |

After the sliding test, the cleaning performance was recognized by visually observing silica particles remaining on the cleaning range. An evaluation was performed by using the following criteria. In addition, the symbol "A", "B", or "C" was shown in the column "Cleaning Performance Rank" of each of Table 2 and Table 3 in accordance with the results of the evaluations.

Rank A: All the silica particles were able to be removed.

Rank B: Remaining of the silica particles was recognized, but no dirt in which the silica particles remained in a streak-like manner was observed.

Rank C: Dirt in which the silica particles remained in a streak-like manner owing to chipping of the molded body was observed.

<Materials>

Materials used in Examples are described below.

[Polyisocyanate Component]

(1) Mixture of a xylylene diisocyanate trimer (isocyanurate form) and a xylylene diisocyanate monomer (molar ratio-trimer:monomer=1:1.2): product name: "Takenate (trademark) XD-131R", manufactured by Mitsui Chemicals, Inc.
(2) Polyisocyanate containing a 4,4'-diphenylmethane diisocyanate (MDI) trimer as a main component: product name: "Millionate (trademark) MR-200", manufactured by Tosoh Corporation
(3) 1,5-Pentamethylene diisocyanate trimer (isocyanurate form): product name: "STABiO (trademark) D-370N", manufactured by Mitsui Chemicals, Inc.
(4) Xylylene diisocyanate: product name: "XDI", manufactured by Tokyo Chemical Industry Co., Ltd.
(5) 4,4'-Diphenylmethane diisocyanate: product name: "Millionate (trademark) MT" (manufactured by Tosoh Corporation)

[Polyol Component]

(1) Polyester polyol: product name: "NIPPOLLAN (trademark) 164", manufactured by Tosoh Corporation
A combination of $R_1$ and $R_2$ in the chemical formula (1) having 4 and 6 carbon atoms, respectively.
(2) Polyester polyol: product name: "NIPPOLLAN (trademark) 4009", manufactured by Tosoh Corporation
$R_1$ and $R_2$ in the chemical formula (1) each having 4 carbon atoms.
(3) Polyester polyol: product name: "POLYLITE (trademark) OD-X-2555", manufactured by DIC Corporation
A combination of $R_1$ and $R_2$ in the chemical formula (1) having 6 and 10 carbon atoms, respectively.

[Chain Extender]

1,4-Butanediol (1,4-BD): manufactured by Tokyo Chemical Industry Co., Ltd.

[Catalyst]

(1) Dibutyltin dilaurate: manufactured by Tokyo Chemical Industry Co., Ltd.
(2) Tertiary amine catalyst: product name: "RZETA (trademark)", manufactured by Tosoh Corporation

[Example 1]

A polyol component, a chain extender, and a urethanization catalyst were blended at masses shown in Table 1. Each component was subjected to desiccation treatment through heating under reduced pressure as required. The blended liquid mixture was stirred under reduced pressure for 5 minutes to provide a uniform solution containing a polyol as a main component.
The solution containing a polyol as a main component was blended with a polyisocyanate component at a mass shown in Table 1, and the mixture was stirred again under reduced pressure for 3 minutes and then cast into a mold that had been heated to 130°C (thickness: 2 mm, height: 40 mm, width: 200 m). Primary curing was performed for 3 minutes, and then the mold was rapidly cooled to 25°C. The resultant was subjected to secondary curing by being kept in the mold for 12 hours. After that, the resultant was removed from the mold. Thus, a molded body 1 was obtained.
The mold used had a release agent applied thereto before the polyurethane elastomer composition was poured thereinto. A mixture of the following materials was used as the release agent.

| | |
|---|---|
| ELEMENT 14 PDMS 1000-JC (product name, manufactured by Momentive Performance Materials) | 5.06 g |
| ELEMENT 14 PDMS 10K-JC (product name, manufactured by Momentive Performance Materials) | 6.19 g |
| SR1000 (product name, manufactured by Momentive Performance Materials) | 3.75 g |

(continued)

| | |
|---|---|
| EXXSOL (trademark) DSP145/160 (product name, manufactured by Exxon Mobil Corporation) | 85 g |

The molded body was appropriately cut to provide a test piece to be used in the above-mentioned evaluations. The results of the evaluations thus obtained are shown Table 2.

[Examples 2 to 10]

Molded bodies 2 to 10 were each obtained in the same manner as in Example 1 except that the blending and the curing conditions were changed as shown in Table 1. The same evaluations as in Example 1 were performed, and the results are shown in Table 2.

[Comparative Examples 1 and 2]

Molded bodies 11 and 12 were each obtained in the same manner as in Example 1 except that the blending and the curing conditions were changed as shown in Table 1. The obtained molded bodies 11 and 12 were evaluated in the same manner as in Example 1, and the results of the evaluations are shown in Table 3.

[Comparative Example 3]

An impregnant was prepared by mixing the following materials.

| | |
|---|---|
| Polymeric MDI (MR-100, manufactured by Nippon Polyurethane Industry Co., Ltd.) | 10 g |
| Silicone resin (MODIPER FS-700, manufactured by NOF Corporation) | 2 g |
| 2-Butanone (manufactured by Tokyo Chemical Industry Co., Ltd.) | 88 g |

The molded body 11 obtained in the same manner as in Comparative Example 1 was immersed in the prepared impregnant for 180 seconds, followed by aging under an environment having a temperature of 23°C and a relative humidity of 55% for 3 hours to provide a molded body 13. The obtained molded body 13 was evaluated in the same manner as in Example 1, and the results of the evaluations are shown in Table 3.

[Table 1]

| | | | Example | | | | | | | | | | Comparative Example | | |
|---|---|---|---|---|---|---|---|---|---|---|---|---|---|---|---|
| | | | 1 | 2 | 3 | 4 | 5 | 6 | 7 | 8 | 9 | 10 | 1 | 2 | 3 |
| Polyol component | NIPPOLLAN 4009 | g | | 57.3 | 54.6 | 68.1 | 70.1 | 57.3 | 68.1 | | | 54.6 | | | |
| | NIPPOLLAN 164 | g | 68.0 | | | | | | | 68.0 | 76.7 | | 68.0 | | 68.0 |
| | POLYLITE OD-X-2555 | g | | 24.6 | 23.4 | | | 24.6 | | | | 23.4 | | 91.3 | |
| Polyisocyanate component | Takenate XD-131R | g | 30.1 | | | 30.1 | | | 30.1 | 30.1 | | | 30.1 | | 30.1 |
| | Millionate MR-200 | g | | 11.4 | | | | 11.4 | | | | 7.5 | | 5.3 | |
| | XDI | g | | 6.1 | | | 11.0 | 6.1 | | | | | | 2.8 | |
| | MDI | g | | | 7.5 | | | | | | 7.5 | 13.9 | | | |
| | STABiO D-370N | g | | | 13.9 | | 16.6 | | | | 13.9 | | | | |
| Chain extender | Butanediol | g | 1.9 | 0.7 | 0.6 | 1.9 | 2.0 | 0.7 | 1.9 | 1.9 | 1.9 | | 1.9 | 0.6 | 1.9 |
| Catalyst | Dibutyltin dilaurate | g | 0.02 | | | 0.02 | | | 0.02 | 0.02 | 0.02 | | 0.02 | | 0.02 |
| | RZETA | g | | 1.01 | 1.01 | | 1.01 | 1.01 | | | | 1.00 | | 1.01 | |
| Primary curing | Mold temperature | °C | 130 | 130 | 130 | 130 | 100 | 100 | 130 | 100 | 130 | 100 | 130 | 130 | 130 |
| | Curing time | min | 3 | 6 | 150 | 3 | 3 | 6 | 1 | 3 | 3 | 150 | 80 | 40 | 80 |
| Secondary curing | Temperature | °C | 25 | 55 | 25 | 25 | 25 | 55 | 25 | 25 | 25 | 25 | 130 | 60 | 130 |
| | Curing time | h | 12 | 12 | 12 | 12 | 12 | 12 | 12 | 12 | 12 | 12 | 12 | 12 | 12 |

[Table 2]

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| Mass spectrometry | M2/M1 | | 0.0442 | 0.0482 | 0.0460 | 0.0604 | 0.0650 | 0.0482 | 0.0604 | 0.0442 | 0.0442 | 0.0482 |
| Crystallinity analysis | | | Y | Y | Y | Y | Y | Y | Y | Y | Y | Y |
| Area to be evaluated | | | Y | Y | Y | Y | Y | Y | Y | Y | Y | Y |
| Martens hardness | HM1 | ($N/mm^2$) | 3.0 | 1.0 | 3.0 | 2.0 | 4.2 | 2.0 | 1.0 | 5.0 | 5.0 | 1.0 |
| | HM2 (30 μm) | ($N/mm^2$) | 3.0 | 1.0 | 3.0 | 2.0 | 4.2 | 2.0 | 1.0 | 5.0 | 5.0 | 1.0 |
| | HM3 (60 μm) | ($N/mm^2$) | 0.6 | 0.6 | 0.7 | 0.6 | 0.7 | 0.6 | 0.6 | 0.7 | 0.7 | 0.6 |
| | HM4 (90 μm) | ($N/mm^2$) | 0.5 | 0.5 | 0.6 | 0.5 | 0.6 | 0.5 | 0.5 | 0.6 | 0.6 | 0.5 |
| Erosion rate E | | (μm/g) | 0.40 | 0.25 | 0.17 | 0.50 | 0.27 | 0.13 | 0.59 | 0.59 | 0.17 | 0.17 |
| Cleaning performance rank | | | B | C | B | C | A | C | C | A | A | C |

[Table 3]

| | | | Comparative Example | | |
|---|---|---|---|---|---|
| | | | 1 | 2 | 3 |
| Mass spectrometry | M2/M1 | | 0.0442 | 0.0900 | 0.0442 |
| Crystallinity analysis | | | N | N | N |
| Area to be evaluated | | | Y | Y | Y |
| Martens hardness | HM1 | ($N/mm^2$) | 0.6 | 2.5 | 3.2 |
| | HM2 (30 $\mu$m) | ($N/mm^2$) | 0.6 | 2.5 | 3.2 |
| | HM3 (60 $\mu$m) | ($N/mm^2$) | 0.6 | 2.5 | 3.2 |
| | HM4 (90 $\mu$m) | ($N/mm^2$) | 0.6 | 2.5 | 3.2 |
| Erosion rate E | | ($\mu$m/g) | 0.59 | 0.91 | 1.49 |
| Cleaning performance rank | | | D | C | B |

The present invention is not limited to the embodiments described above, and various changes and modifications may be made without departing from the spirit and scope of the present invention. Accordingly, the following claims are appended hereto in order to make the scope of the present invention public.

The present application claims priority based on Japanese Patent Application No. 2021-141902 filed on August 31, 2021, and Japanese Patent Application No. 2022-127858 filed on August 10, 2022, and the entire contents thereof are incorporated herein by reference.

[Reference Signs List]

11 molded body
21 nozzle
22 slurry
23 molded body
24 spherical alumina
25 water

## Claims

**1.** A non-foamed molded body comprising a polyurethane,

wherein, assuming that a straight line L that passes through a center of gravity G of the molded body and a point on a surface of the molded body positioned at a shortest distance from the center of gravity G and that penetrates through the molded body is drawn, a length of a longest line segment LM out of portions on the straight line L that overlap the molded body is at least 180 $\mu$m,
wherein, when
a Martens hardness measured at a point SA on the surface of the molded body where one end portion A of the line segment LM is positioned is represented by $HM_1$, and
in a cross-section of the molded body including an entire length of the line segment LM, Martens hardnesses measured at three points on the line segment LM at intervals of 30 $\mu$m from the end portion A toward another end of the line segment LM are represented by $HM_2$, $HM_3$, and $HM_4$, respectively,
$HM_2>HM_3>HM_4$ is satisfied,
wherein the HMi is 1.0 $N/mm^2$ or more,
wherein, when, with regard to an index value $K_\omega$ determined by the following equation (1) from a scattering profile obtained by allowing a characteristic X-ray from a Cu tube to incident on a surface region to be evaluated of the molded body including the point SA at an incidence angle $\theta$, the index value at $\theta$=0.5° is represented by

$K_{\omega 1}$, the index value at $\theta$=1.0° is represented by $K_{\omega 2}$, and the index value at $\theta$=3.0° is represented by $K_{\omega 3}$, $K_{\omega 1}>K_{\omega 2}>K_{\omega 3}$ is satisfied:

$$K_{\omega}=[I_c/(I_c+I_a)]\times 100 \quad (1)$$

where $I_c$ represents a peak area value at 2$\theta$=21.0° in the scattering profile, and $I_a$ represents a peak area value at 2$\theta$=20.2° in the scattering profile, and
wherein the molded body has an erosion rate E of 0.6 μm/g or less, which is measured with spherical alumina particles having an average particle diameter ($D_{50}$) of 3.0 μm in the surface region to be evaluated.

**2.** The molded body according to claim 1, wherein an area of the surface region to be evaluated is equal to or larger than an irradiation area of the X-ray.

**3.** The molded body according to claim 2, wherein the irradiation area is from 1.5 $mm^2$ to 11.5 $mm^2$.

**4.** The molded body according to any one of claims 1 to 3, wherein the molded body contains a structural unit represented by the following chemical formula (1):

[Chem. 1]
Chemical formula (1)

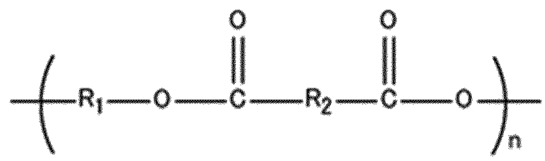

in the chemical formula (1), $R_1$ and $R_2$ each represent a linear divalent hydrocarbon group having 4 to 10 carbon atoms, and $R_1$ and $R_2$ may be identical to or different from each other, and "n" represents an integer of 1 or more.

**5.** The molded body according to claim 4, wherein, when a detection amount of all ions obtained when a sample sampled from the molded body is heated to be vaporized in an ionization chamber, and is heated at a temperature increase rate of 10°C/sec to 1,000°C through use of a mass spectrometer of a direct sample introduction system involving ionizing a sample molecule is represented by M1, and an integral intensity of a peak of an extracted ion thermogram corresponding to a range of an m/z value derived from the chemical formula (1) is represented by M2, a ratio M2/M1 is from 0.0001 to 0.10000.

**6.** The molded body according to any one of claims 1 to 5, wherein the HMi is 5.0 N/$mm^2$ or less.

FIG. 1

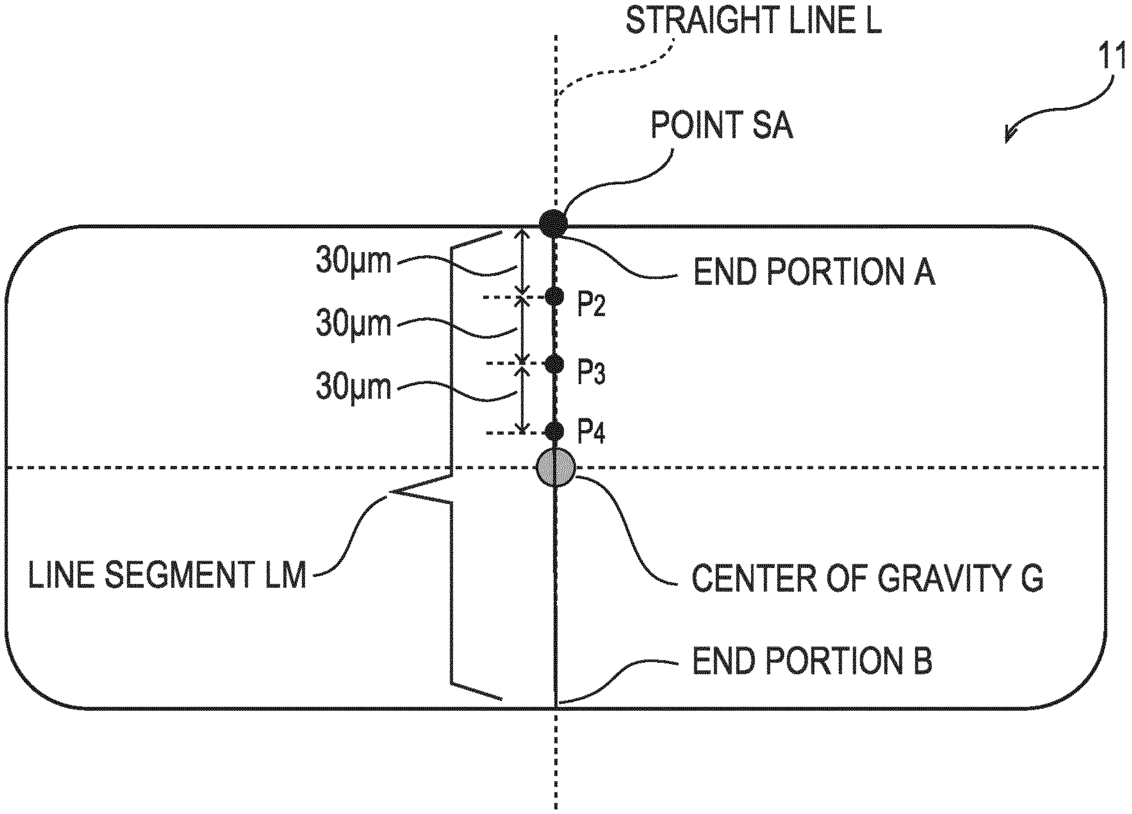
STRAIGHT LINE L
11
POINT SA
30μm
END PORTION A
P2
30μm
P3
30μm
P4
LINE SEGMENT LM
CENTER OF GRAVITY G
END PORTION B

FIG. 2

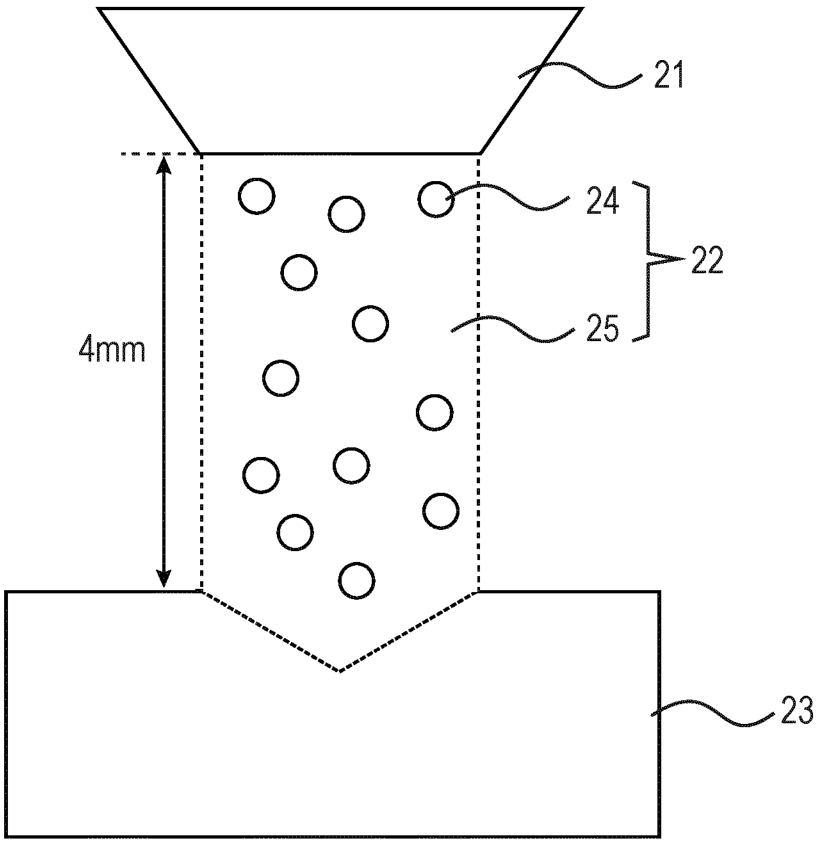

## INTERNATIONAL SEARCH REPORT

International application No.
**PCT/JP2022/032142**

**A. CLASSIFICATION OF SUBJECT MATTER**

***B29C 39/44***(2006.01)i; ***C08J 5/00***(2006.01)i; ***C08G 18/42***(2006.01)i
FI: B29C39/44; C08J5/00 CFF; C08G18/42

According to International Patent Classification (IPC) or to both national classification and IPC

**B. FIELDS SEARCHED**

Minimum documentation searched (classification system followed by classification symbols)

B29C39/00-39/44; C08J5/00; C08G18/42; G03G21/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-36363 A (SUMITOMO RIKO CO., LTD.) 08 March 2018 (2018-03-08) entire text | 1-6 |
| A | JP 2018-77466 A (CANON KABUSHIKI KAISHA) 17 May 2018 (2018-05-17) entire text | 1-6 |
| A | WO 2021/112123 A1 (CANON KABUSHIKI KAISHA) 10 June 2021 (2021-06-10) entire text | 1-6 |
| A | JP 5532376 B2 (RICOH COMPANY, LTD.) 25 June 2014 (2014-06-25) entire text | 1-6 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 October 2022** | **25 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/032142**

| Patent document cited in search report | Publication date (day/month/year) | Patent family member(s) | Publication date (day/month/year) |
|---|---|---|---|
| JP 2018-36363 A | 08 March 2018 | (Family: none) | |
| JP 2018-77466 A | 17 May 2018 | US 2018/0120753 A1<br>entire text | |
| WO 2021/112123 A1 | 10 June 2021 | (Family: none) | |
| JP 5532376 B2 | 25 June 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5532376 B
- JP 2021141902 A
- JP 2022127858 A